# EUROPÄISCHE PATENTSCHRIFT

(11) **EP 0 599 432 B1**
(45) Veröffentlichungstag und Bekanntmachung des Hinweises auf die Patenterteilung: **23.08.1995**
(21) Anmeldenummer: 93250274.3
(22) Anmeldetag: 11.10.1993
(51) Int. Cl.: F16K 47/10, F16K 47/04, F16K 15/02

(54) **Drosselrückschlagelement**
Check valve with a throttle device
Soupape de retenue avec dispositif d'étranglement

(30) Priorität: 24.11.1992 DE 4240669
(43) Veröffentlichungstag der Anmeldung: 01.06.1994
(73) Patentinhaber: MANNESMANN Aktiengesellschaft, 40213 Düsseldorf (DE)
(72) Erfinder: Kane, Brian, D-55257 Budenheim (DE)
(74) Vertreter: Meissner, Peter E., Dipl.-Ing.

(56) Entgegenhaltungen:
- DE-A- 1 804 026
- DE-A- 3 312 510
- DE-B- 1 167 612
- DE-U- 7 016 093
- US-A- 3 595 265

## Beschreibung

Die Erfindung betrifft ein Drosselrückschlagelement zur Begrenzung des Durchflusses eines in einer Druckleitung geführten Fluids gemäß dem Gattungsbegriff des Anspruches 1.

Im Sinne einer einfachen Regelung der Geschwindigkeit eines in einer Druckleitung fließenden Fluids werden Drosselstellen eingebaut, wobei man diese grundsätzlich unterscheidet in nichtverstellbare und verstellbare Drosseln. Nichtverstellbar bedeutet, daß die gewünschte Geschwindigkeitsreduzierung durch die Art und den Querschnitt der Verengung einmal vorgegeben ist und die Durchflußmenge dann nur noch viskositäts- d. h. in erster Linie temperaturabhängig ist. Bei einer verstellbaren Drossel kann der Querschnitt der Verengung in Stufen oder kontinuierlich von außen verändert werden. Die Betätigung kann mechanisch, hydraulisch, pneumatisch oder elektrisch erfolgen. Falls die Drosselung nur in einer Fließrichtung erfolgen soll und bei Umkehrung der Fließrichtung ein freier Durchlaß gefordert wird, wählt man für die Mengenregelung ein sogenanntes Drosselrückschlagelement.

Um die gewünschte Drosselung zu erreichen, werden in einfacher Weise in dem eigentlichen Drosselkörper mindestens eine oder mehrere kleine Bohrungen angebracht, um das über einen wesentlich größeren Querschnitt zugeführte Fluid durch diese Verengung zu pressen. Diese Ausführungsform hat den Nachteil, daß in den engen Bohrungen sich sehr leicht Schmutzteilchen festsetzen können, so daß der Durchfluß unter Umständen völlig unterbunden wird. Dies ist für kritische Anwendungsfälle beispielsweise im Flugzeugbau zur Betätigung funktionswichtiger Elemente nicht akzeptabel. Aus diesem Grunde wird für solche Fälle an diesen Stellen die Anordnung eines Siebes vorgeschrieben, um die Schmutzteilchen abzufangen. Da die Bauteile meistens sehr klein sind, ist die Anordnung eines Siebes konstruktiv oft schwierig, zumal das Sieb in vielen Fällen austauschbar angeordnet werden muß, weil es sich ansonsten zusetzen könnte.

In der US-PS 3,595,265 ist ein selbstreinigendes Prüfventil offenbart, das in "Offen"-Stellung für einen freien Durchfluß und in der "Geschlossen"-Stellung für einen verminderten Durchfluß des Fluids sorgt. Zur Drosselung des Durchflusses ist auf einer Stirnseite des Ventilkörpers ein durchgehender Schlitz angeordnet, der mit zwei im Mantelbereich des Ventilkörpers angeordneten Überströmkanälen in Verbindung steht. Der Dichtsitz wird gebildet durch die Stirnfläche des Ventilkörpers mit der innenliegenden Stirnfläche der Bohrung des Gehäuses, in dem der Ventilkörper axial verschiebbar angeordnet ist. Die notwendige Anpreßkraft wird durch eine in der Bohrung des Gehäuses angeordnete Fader erzeugt, die sich einerseits auf den Ventilkörper und andererseits auf einen in der Bohrung angeordneten Stopfen abstützt. Das Gehäuse des Ventils ist mit zwei Arbeitsanschlüssen versehen, wobei der eine achsgleich mit der Bohrung des Gehäuses liegt und der andere senkrecht dazu in der Bohrung mündet. Für den Fall, daß sich der schmale Drosselschlitz mit Partikeln zugesetzt hat, kann in der "Offen"-Stellung des Ventils der Schlitz freigespült werden. Dazu muß aber der Druck in dem achsgleich mit der Bohrung liegenden Arbeitsanschluß so hoch sein, daß die entgegenstehende Federkraft überwunden wird. Dabei ist auch noch der im anderen Arbeitsanschluß herrschende Gegendruck zu berücksichtigen. Bei diesem Ventil ist von Nachteil, daß es wegen der senkrecht zueinander liegenden Arbeitsanschlüsse nicht ohne weiteres in eine Fluidleitung einbaubar ist und das Freispülen des Schlitzes nur in der "Offen"-Stellung möglich ist. Von weiterem Nachteil ist die aufwendige Herstellung des Ventilgehäuses mit der langen genau fluchtenden Paßbohrung und der abdichtenden innenliegenden Stirnfläche. Verteuert wird die Konstruktion auch durch die Anordnung eines hochdruckdichten Stopfens zur Abstützung der Feder.

Aus der DE-GM 7016093 ist ein gattungsbildendes Drosselrückschlagelement bekannt, das aus einem druckfesten Gehäuse mit zwei achsgleich liegenden Arbeitsanschlüssen besteht. In einer Bohrung des Gehäuses ist ein axial frei verschiebbarer Ventilkörper in Form eines Kegelstumpfes angeordnet, der auf einer Stirnseite mit einem, einen Überströmkanal bildenden Schlitz versehen ist. Der Dichtsitz wird gebildet durch die Kegelfläche des Ventilkörpers im Zusammenwirken mit einer entsprechenden Fläche im Gehäuse. Zur Drosselung des Gasstromes ist auf der kleinen Stirnfläche des Ventilkörpers eine Bohrung mit einem Durchmesser zwischen 0,07 - 0,1 mm angeordnet.
In der "Geschlossen"-Stellung ist der durchgehende Schlitz durch die Kegelfläche des Gehäuses abgedeckt und der Gasstrom kann nur durch die kleine Bohrung des Ventilkörpers fließen. In der "Offen"-Stellung bildet der durchgehende Schlitz sowie der zwischen Kegelmantel des Ventilkörpers und Bohrung des Gehäuses sich bildende Ringraum Überstromkanäle, die für einen freien Durchfluß des Gases sorgen.

Nachteilig bei dieser Konstruktion ist die nur endseitige Führung des Ventilkörpers, die ein Verkanten nicht ausschließt. Die Herstellung der großen aufeinanderpassenden Dichtflächen ist aufwendig und ein Freispülen der möglicherweise sich zusetzenden Bohrung ist nicht möglich.

Aufgabe der Erfindung ist es, ein nicht verstellbares Drosselrückschlagelement anzugeben, das in einfacher Weise selbstreinigend ist und bei geringem Gewicht einfach und kostengünstig hergestellt werden kann und insbesondere für die Flugzeughydraulik geeignet ist.

Diese Aufgabe wird mit den im kennzeichnenden Teil des Anspruches 1 angegebenen Merkmalen gelöst. Vorteilhafte Weiterbildungen sind Bestandteil von Unteransprüchen.

Der Ventilkörper ist erfindungsgemäß als ein im wesentlichen zylindrischer Kolben ausgebildet, der in einem Bohrungsabschnitt des Gehäuses geführt wird, wobei die Länge dieses Bohrungsabschnittes mindestens die halbe Kolbenlänge beträgt. Damit ist eine sichere Führung gewährleistet, die ein Verkanten ausschließt. Diese genaue Führung ist auch erforderlich, da der Dichtsitzbereich sehr klein gehalten wird. Er wird gebildet aus der ringförmigen Stirnfläche eines als Normverschraubung ausgebildeten Anschlußnippels, das abdichtend in einem der Arbeitsanschlüsse angeordnet ist und mit der ihm zugewandten Stirnfläche des Kolbens zusammenwirkt. Der Vorteil dieser Anordnung ist darin zu sehen, daß der Aufwand für die Herstellung des Dichtsitzes gering ist, da beide Dichtsitzflächen vor der Montage gut zugänglich sind und entsprechend bearbeitet werden können. Für eine in einer Bohrung liegende Dichtsitzfläche ist der Fertigungsaufwand erheblich höher.

Der durchgehende Schlitz kann in einfacher Weise freigespült werden, da hierfür nur eine kurze Umsteuerung des Durchflusses des Fluids erforderlich ist. Der Kolben ist frei beweglich und bei Druckausgleich in beiden Arbeitsanschlüssen kräftefrei. Eine "Offen"-Stellung des Ventils ist für das Freispülen nicht erforderlich, da ein kurzes Abheben der den Schlitz aufweisenden Stirnfläche vom Dichtsitz ausreichend ist. Dieses kurzfristige Freispülen ist für die Flugzeughydraulik von großer Bedeutung, beispielsweise für das Betätigen der Fahrwerksklappen. Hier ist es ganz wesentlich, daß der die Fahrwerksklappen betätigende Arbeitszylinder in die erforderliche Endstellung gefahren werden kann und nicht wegen mangelnder Hydraulikzufuhr in halber Stellung stehen bleibt. Das würde beispielsweise dann passieren, wenn beim Ausfahren des Arbeitszylinders ein Schmutzteilchen sich im Schlitz festsetzt und die weitere Hydraulikzufuhr soweit drosselt, daß der Druck für das weitere Verschieben des Kolbens des Arbeitszylinders nicht ausreichen würde.

Damit das Fluid in der "Offen"-Stellung des Ventils ungehindert den Kolben passieren kann, weist es entsprechende Überströmkanäle auf. Das können zum einen senkrecht zueinander stehende Bohrungen sein oder gerade abgefräste Flächen im Führungsbereich des Kolbens, wobei sichergestellt ist, daß unabhängig von der axialen Lage des Kolbens diese Überströmkanäle immer in Verbindung stehen mit der zylindrischen Ausnehmung in der Gehäusebohrung.

Das vorgeschlagene Drosselrückschlagelement kann man in einfacher Weise auch zu einer echten Rückschlagklappe umfunktionieren, indem man den auf der Stirnfläche angebrachten Schlitz wegläßt. Damit der Kolben dann wirklich dichtet, ist eine entsprechende Bearbeitung sowohl der anschlagenden Stirnfläche des Kolbens als auch der ringförmigen Stirnfläche des Anschlußnippels erforderlich.

Um das Element als Drosselelement für beide Durchflußrichtungen verwenden zu können, wird auf der dem Anschlußnippel abgewandten Stirnfläche des Kolbens ebenfalls ein durchgehender Schlitz angebracht. Dies geht aber nur in Verbindung mit dem vorgeschlagenen Überstromkanal in Form einer abgefrästen geraden Fläche. Außerdem ist es erforderlich, daß die Tiefe der angefrästen Fläche so gewählt wird, daß die Kante der Fläche auerhalb der Bohrungsfläche des Arbeitsanschlusses liegt. Die Querschnitte der an beiden Stirnflächen angebrachten Schlitze kann man so wählen, daß in beiden Richtungen der Drosseleffekt gleich groß oder unterschiedlich ist.

Je nach Anforderung kann der Kolben aus einem metallischen Werkstoff oder einem faserverstärkten Kunststoff gefertigt sein, wobei im letzteren Fall das Gewicht des Elementes entsprechend reduziert wird.

Der Vorteil des vorgeschlagenen Drosselrückschlagelementes ist darin zu sehen, daß unter Beibehaltung des Selbstreinigungseffektes das Element gewichtsmäßig leichter wird, da es nur wenige Bauteile hat. Außerdem ist die Herstellung kostengünstiger, da außer dem Kolben standardmäßige Teile verwendet werden können. Bei entsprechender Auslegung des einen Arbeitsanschlusses bzw. des Anschlußnippels ist ein solches Element ohne Adapterstück in jede Druckleitung einbaubar.

In der Zeichnung wird anhand zweier Ausführungsbeispiele das erfindungsgemäße Drosselrückschlagelement näher erläutert. Es zeigen:
- Figur 1: einen Längsschnitt durch eine erste Ausführungsform des erfindungsgemäßen Drosselrückschlagelementes
- Figur 2: im vergrößerten Maßstab eine Draufsicht des Kolbens in Richtung x
- Figur 3: einen Längsschnitt einer weiteren Ausführungsform
- Figur 4: im vergrößerten Maßstab eine Draufsicht des Kolbens in Richtung y

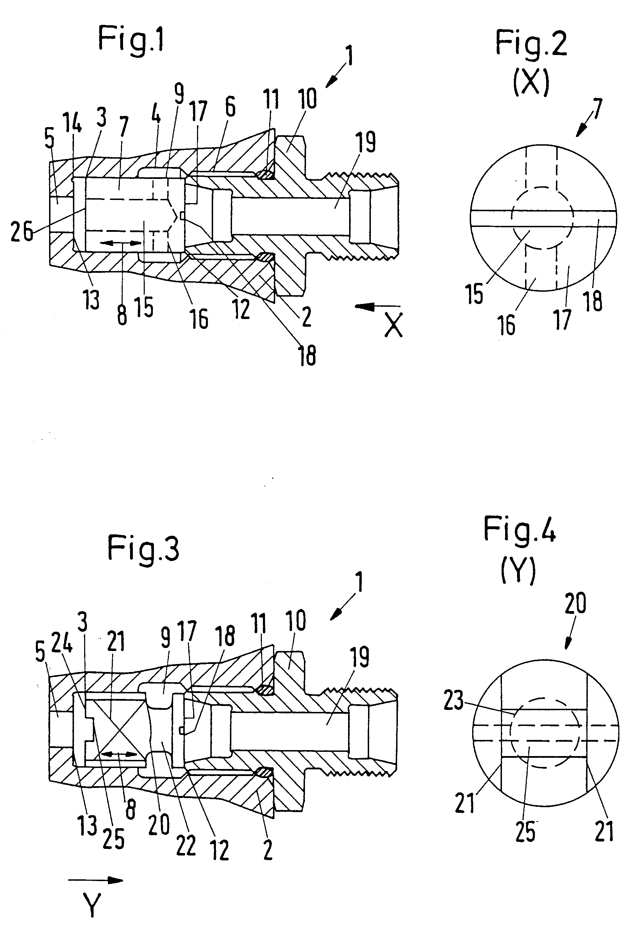

In Figur 1 ist in einem Längsschnitt eine erste Ausführungsform des erfindungsgemäßen Drosselrückschlagelementes 1 dargestellt, wobei Figur 2 im vergrößerten Maßstab eine Draufsicht des Kolbens 7 in Richtung x zeigt. Es besteht aus einem druckfesten Gehäuse 2, das eine Bohrung mit zwei unterschiedlichen Längsabschnitten 3,4 sowie zwei achsgleich entgegenliegende Arbeitsanschlüsse 5,6 aufweist. In der Bohrung des Gehäuses 2 ist ein Kolben 7 angeordnet, der im ersten Längsabschnitt 3 des Gehäuses 2 geführt wird. Der Kolben 7 ist in der Bohrung axial frei verschiebbar, hier angedeutet durch einen Pfeil 8. Der zweite Längsabschnitt 4 der Bohrung des Gehäuses 2 weist eine zylindrische Ausnehmung 9 auf, so daß zwischen der Mantelfläche des Kolbens 7 und der Innenfläche der Ausnehmung 9 ein ringförmiger Kanal gebildet wird. In dem auf der rechten Seite des Gehäuses 2 liegenden Arbeitsanschluß 6 ist ein genormtes Anschlußnippel 10 eingeschraubt. Da das Einschraubgewinde keine sichere Abdichtung gewährleistet, wird im Bereich der Anschlagfläche des Nippels 10 eine Dichtung 11 angeordnet. Die beiden Anlagen für die jeweilige Endlage des Kolbens 7 werden einmal gebildet durch die innenliegende ringförmige Stirnfläche 12 des Nippels 10 und zum anderen durch die innenliegende Stirnfläche 13 des Gehäuses 2, in die der zweite Arbeitsanschluß 5 mündet. Damit es zu keiner Kantenpressung an der letztgenannten Anschlagfläche kommt, weist diese Stirnfläche 13 eine leichte Hinterdrehung 14 auf.

Die Arbeitsweise dieses Elementes 1 kann wie folgt beschrieben werden. Der axial frei verschiebbare Kolben 7 wird in Bewegung 8 gesetzt, wenn zwischen den Arbeitsanschlüssen 5 und 6 ein Differenzdruck herrscht. Unter der Annahme, daß der Druck im links liegenden Arbeitsanschluß 5 größer ist, wird der Kolben 7 nach rechts bis zur ringförmigen Anschlagfläche 12 des Nippels 10 geschoben. Durch die Führung des Kolbens 7 im ersten Längsabschnitt 3 der Bohrung des Gehäuses 2 wird, von einer gewissen Leckagerate einmal abgesehen, das Fluid gezwungen durch die Sackbohrung 15 des Kolbens 7 zu strömen. Diese Sackbohrung 15 mündet in einer Querbohrung 16, so daß das Fluid nach beiden Seiten in den Ringraum 9 strömen kann. Ein direktes Weiterströmen wird verhindert durch den an der Stirnfläche 12 des Nippels anliegenden Kolben 7 infolge des auf die linke Stirnfläche 26 des Kolbens wirkenden Differenzdruckes. Das Fluid hat nur die Möglichkeit durch den auf der Stirnfläche 17 des Kolbens 7 angebrachten Schlitz 18 zu strömen, wobei durch den kleinen Querschnitt des Schlitzes 18 im Vergleich zu den im Kolbenkörper angebrachten Kanälen 15,16 die gewünschte Drosselwirkung erzielt wird. Von da an kann das Fluid ungehindert durch die Bohrung 19 des Nippels 10 weiterströmen. Bei Umkehrung des Differenzdruckes wird der Kolben 7 nach links geschoben, bis er an der ringförmigen Stirnfläche 13 des Gehäuses 2 zur Anlage kommt. Die Bewegung des Kolbens 7 erfolgt durch die Einwirkung des Differenzdruckes auf die Stirnfläche 17 des Kolbens 7. Durch das Wegschieben des Kolbens 7 entsteht zwischen der Stirnfläche 17 des Kolbens 7 und der Anschlagfläche 12 des Nippels 10 ein großer freier Raum, durch den das Fluid ungehindert fließen kann. Der weitere Abfluß erfolgt über den Ringraum 9 sowie die Kanäle 15,16 des Kolbens 7.

Es ist leicht erkennbar, daß man diese Ausführungsform in einfacher Weise in eine echte Rückschlaglappe umfunktionieren kann, indem man den Schlitz 18 der Stirnfläche 17 des Kolbens 7 wegläßt. Bei entsprechend sorgfältig bearbeiteter Oberfläche der beiden anschlagenden Stirnflächen 12,17 kann dann für diese Durchflußrichtung, d. h. von links nach rechts eine völlige Durchgangssperre erreicht werden.

In Figur 3 ist ebenfalls in einem Längsschnitt eine weitere Ausführungsform des erfindunsgemäßen Drosselrückschlagelementes 1 dargestellt, wobei Figur 4 im vergrößerten Maßstab eine Draufsicht des Kolbens 20 in Richtung y zeigt. Zur Vereinfachung der Darstellung sind Für gleiche Teile gleiche Bezugszeichen wie in Figur 1 verwendet worden. Der grundsätzliche Aufbau ist ähnlich dem der in Figur 1 dargestellten Ausführungsform, nur der Kolben 20 ist anders gestaltet. Statt der Kanäle 15,16 (Fig. 1) sind für das Überströmen im Führungsbereich des Kolbens 20 zwei gerade Flächen 21 angefräst. Die axiale Länge dieser angefrästen Flächen 21 muß mindestens der Länge des ersten Längsabschnittes 3 des Gehäuses 2 entsprechen, damit das Fluid in den Ringraum 9 fließen kann. Für einen freien Durchfluß in umgekehrter Richtung, d. h. vom Arbeitsanschluß 6 zum Arbeitsanschluß 5 ist es erforderlich, die angefrästen Flächen 21 bis in den Endbereich des Kolbens 7 zu verlängern. Dadurch wird sichergestellt, daß bei Einnehmen der linken Endlage des Kolbens 7 ein Teil der angefrästen Flächen 21 in den Ringraum 9 hineinragt. Alternativ ist es auch möglich, wie hier in Figur 3 dargestellt, im Anschluß an die angefrästen Flächen 21 einen Bereich 22 mit einem geringeren Durchmesser anzudrehen. Auch dadurch wird sichergestellt, daß ein freier Durchfluß für das Fluid vom Arbeitsanschluß 6 zum Arbeitsanschluß 5 gewährleistet ist. Um das Element als Drosselelement für beide Durchflußrichtungen verwenden zu können, ist wie in Figur 3 und 4 dargestellt auf der linken Stirnfläche 24 des Kolbens 20 ebenfalls ein durchgehender Schlitz 25 angebracht. Damit die Drosselung über dem Schlitz 25 wirksam wird, ist es erforderlich, daß die Kante der angefrästen Flächen 21 außerhalb der Bohrungsfläche 23 des Arbeitsanschlusses 5 liegt. Anderenfalls könnte das Fluid ungehindert abströmen und wäre nicht gezwungen durch den Schlitz 25 zu fließen. Je nach Wahl des Querschnittes der beiden angebrachten Schlitze 18,25 kann man die Drosselwirkung in beiden Durchflußrichtungen gleich oder unterschiedlich machen. Für den Fall, daß dieses Element die gleiche Funktion erfüllen soll, wie die in Figur 1 dargestellte Ausführungsform, wird in einfacher Weise der Schlitz 25 entsprechend größer gemacht. Auf eine Beschreibung der Arbeitsweise dieses zweiten Ausführungsbeispieles kann verzichtet werden, da sie prinzipiell mit der zuvor erläuterten Arbeitsweise der in Figur 1 dargestellten Ausführungsform übereinstimmt. Auch dieses in Figur 3 dargestellte Element kann man in einfacher Weise als echte Rückschlagklappe verwenden, indem man den Schlitz 18 auf der rechten Stirnfläche 17 des Kolbens 7 wegläßt oder alternativ den Schlitz 25 auf der linken Stirnfläche 24 des Kolbens 7.

## Patentansprüche

1. Drosselrückschlagelement (1) zur Begrenzung des Durchflusses eines in einer Druckleitung geführten Fluids, bestehend aus einem druckfesten Gehäuse (2) mit zwei achsgleich liegenden Arbeitsanschlüssen (5,6) und einem in einer Bohrung des Gehäuses (2) angeordneten, axial frei verschiebbaren Ventilkörper (7,20), der auf einer Stirnseite (17) mit einem durchgehenden, einen Überströmkanal bildenden Schlitz (18) versehen ist,
**dadurch gekennzeichnet,**
daß der Ventilkörper als ein im wesentlichen zylindrischer Kolben (7,20) ausgebildet ist, der in einem Bohrungsabschnitt (3) des Gehäuses (2) geführt wird, dessen Länge mindestens 50 % der Kolbenlänge beträgt und der daran anschließende Bohrungsabschnitt (4) des Gehäuses (2) eine zylindrische Ausnehmung (9) aufweist, die mit den im Mantelbereich des Kolbens (7,20) liegenden Überströmkanälen (16,21,22) in Verbindung steht und mit einem Absatz übergeht in den ein etwas kleineren Innendurchmesser aufweisenden Arbeitsanschluß (6), in dem abgedichtet ein als Normverschraubung (10) ausgebildetes Anschlußnippel angeordnet ist, dessen im Gehäuse (2) liegende ringförmige, in den Bereich der Ausnehmung (9) hineinragende Stirnseite (12)zusammen mit der ihr zugewandten Stirnfläche (17) des Kolbens (7,20) einen Dichtsitz bildet und der durchgehende Schlitz (18) auf der der Normverschraubung (10) zugewandten Stirnfläche (17) des Kolbens (7,20) angeordnet ist und unabhängig von der axialen Lage des Kolbens (7,20) immer in Verbindung steht mit der Ausnehmung (9) des zweiten Bohrungsabschnittes (4).

2. Drosselrückschlagelement nach Anspruch 1,
**dadurch gekennzeichnet,**
daß der Kolben (7) eine von der linken Stirnfläche (26) ausgehende Sackbohrung (15) aufweist, die in einer durch den Kolben (7) sich erstreckende Querbohrung (16) mündet und die Querbohrung (16) unabhängig von der axialen Lage des Kolbens (7) in Verbindung steht mit der Ausnehmung (9) des zweiten Bohrungsabschnittes (4).

3. Drosselrückschlagelement nach Anspruch 1,
**dadurch gekennzeichnet,**
daß der Kolben (20) im Führungsbereich mindestens einen von der Kreisform abweichenden, vorzugsweise einen geraden Abschnitt (21) aufweist, dessen axiale Länge mindestens der Länge des ersten Bohrungsabschnittes (3) des Gehäuses (2) entspricht.

4. Drosselrückschlagelement nach Anspruch 3,
**dadurch gekennzeichnet,**
daß die axiale Länge des geraden Abschnittes (21) des Kolbens (20) der Länge des ersten Bohrungsabschnittes (3) des Gehäuses (2) entspricht und sich daran ein Bereich (22) mit einem geringeren Durchmesser anschließt, der unabhängig von der axialen Lage des Kolbens (20) in Verbindung steht mit der Ausnehmung (9) des zweiten Bohrungsabschnittes (4).

5. Drosselrückschlagelement nach den Ansprüchen 1 und 3,
**dadurch gekennzeichnet,**
daß der Kolben (20) an der der Normverschraubung (10) gegenüberliegenden Stirnfläche (24) einen durchgehenden Schlitz (25) aufweist und in der Draufsicht die Kante des Überströmbereiches (21) des Kolbens (20) außerhalb der Bohrungsfläche (23) des Arbeitsanschlusses (5) liegt.

6. Drosselrückschlagelement nach den Ansprüchen 1 und 5,
**dadurch gekennzeichnet,**
daß die beiden an den Stirnflächen (17,24) des Kolbens (20) angeordneten Schlitze (18,25) einen gleichen oder unterschiedlichen Querschnitt aufweisen.

7. Drosselrückschlagelement nach Anspruch 5,
**dadurch gekennzeichnet,**
daß für einen freien Durchfluß vom rechten Arbeitsanschluß (6) zum linken Arbeitsanschluß (5) der durchgehende Schlitz (25) im Querschnitt entsprechend groß ist.

## Claims

1. A one-way element (1) for restricting through-flow of a fluid conveyed in a pressure pipe, consisting of a pressure-resistant housing (2) with two coaxial working connections (5, 6) and-an axially freely displaceable valve member (7, 20) arranged in a bore in the housing (2), which valve member (7, 20) is provided on one end (17) with a through-slit (18) forming an overflow channel, characterized in that the valve member is constructed as a substantially cylindrical piston (7, 20), which is guided in a bored portion (3) of the housing (2), the length of which portion amounts to at least 50 % of the piston length, in that the bored portion (4) of the housing (2) adjacent thereto comprises a cylindrical recess (9) which is connected with the overflow channels (16, 21, 22) lying in the circumferential area of the piston (7, 20) and merges with a step into the working connection (6) comprising a somewhat smaller internal diameter, in which working connection (6) there is sealedly arranged a connection fitting constructed as a standard screw fitting (10), the annular end (12) of which connection fitting is located in the housing (2), projects into the area of the recess (9) and forms a tight seat together with the end face (17) of the piston (7, 20) facing it, and in that the through-slit (18) is arranged on the end face (17) of the piston (7, 20) facing the standard screw fitting (10) and is in constant connection with the recess (9) of the second bored portion (4) irrespective of the axial position of the piston (7, 20).

2. A one-way element according to claim 1, characterized in that the piston (7) comprises a pocket bore (15) extending from the left end face (26) and opening in a transverse bore (16) extending through the piston (7) and in that the transverse bore (16) is connected with the recess (9) of the second bored portion (4) irrespective of the axial position of the piston (7).

3. A one-way element according to claim 1, characterized in that in the guide area the piston (20) comprises at least one portion (21) deviating from the circular and preferably straight, the axial length of which portion (21) corresponds at least to the length of the first bored portion (3) of the housing (2).

4. A one-way element according to claim 3, characterized in that the axial length of the straight portion (21) of the piston (20) corresponds to the length of the first bored portion (3) of the housing (2) and in that an area (22) with a smaller diameter is adjacent thereto, which area (22) is connected with the recess (9) of the second bored portion (4) irrespective of the axial position of the piston (20).

5. A one-way element according to claim 1 and claim 3, characterized in that the piston (20) comprises a through-slit (25) in the opposite end face (24) from the standard screw fitting (10) and in that in plan view the edge of the overflow area (21) of the piston (20) lies outside the bore surface (23) of the working connection (5).

6. A one-way element according to claim 1 and claim 5, characterized in that the two slits (18, 25) arranged at the end faces (17, 24) of the piston (20) exhibit like or differing cross sections.

7. A one-way element according to claim 5, characterized in that the through-slit (25) has an appropriately sized cross section for free through-flow from the right-hand working connection (6) to the left-hand working connection (5).

## Revendications

1. Elément de retenue avec étranglement (1) pour limiter la circulation d'un fluide guidé dans une conduite sous pression, comportant un boîtier (2) résistant à la pression avec deux raccordements de travail colinéaires (5,6) et un corps de soupape (7,20) agencé dans un perçage du boîtier (2), pouvant être déplacé de façon libre axialement et muni sur une face frontale (17) d'une fente traversante (18) formant un canal de trop-plein,
caractérisé en ce que le corps de soupape est réalisé sous forme d'un piston (7,20) pour l'essentiel cylindrique, guidé dans un tronçon percé (3) du boîtier (2), dont la longueur vaut au moins 50% de la longueur du piston, et le tronçon percé (4) du boîtier (2), qui y est raccordé, présente un évidement cylindrique (9) qui est relié aux canaux de trop-plein (16,21,22) situés dans la zone d'enveloppe du piston (7,20) et qui passe avec un talon dans le raccordement de travail (6) présentant un diamètre interne un peu plus faible, dans lequel est agencé de façon étanche un nipple de raccordement réalisé sous forme d'un raccord à vis normalisé (10), dont la face frontale annulaire (12) située dans le boîtier (2) et faisant saillie dans la zone de l'évidement (9) forme conjointement avec la face frontale (17) en regard du piston (7,20), un siège d'étanchéité, et la fente traversante (18) agencée sur la face frontale (17) du piston (7,20) en regard du raccord à vis normalisé (10), et indépendamment de la position axiale du piston (7,20), est toujours en liaison avec l'évidement (9) du second tronçon percé (4).

2. Elément de retenue avec étranglement selon la revendication 1,
caractérisé en ce que le piston (7) présente un perçage borgne (15) partant de la face frontale gauche (26) et débouchant dans un perçage transversal (16) s'étendant à travers le piston (7), et le perçage transversal (16) est en liaison avec l'évidement (9) du second tronçon percé (4), indépendamment de la position axiale du piston (7).

3. Elément de retenue avec étranglement selon la revendication 1,
caractérisé en ce que le piston (20) présente, dans la zone de guidage, au moins un tronçon (21) s'écartant de la forme circulaire, de préférence rectiligne, dont la longueur axiale correspond au moins à la longueur du premier tronçon percé (3) du boîtier (2).

4. Elément de retenue avec étranglement selon la revendication 3,
caractérisé en ce que la longueur axiale du tronçon rectiligne (21) du piston (20) correspond à la longueur du premier tronçon percé (3) du boîtier (2), et une zone (22) avec un diamètre plus réduit y est raccordée, zone qui est reliée à l'évidement (9) du second tronçon percé (4) indépendamment de la position axiale du piston (20).

5. Elément de retenue avec étranglement selon les revendications 1 et 3,
caractérisé en ce que le piston (20) présente sur la face frontale (24) opposée au raccord à vis normalisé (10) une fente traversante (25), et en vue en plan, le bord de la zone de trop-plein (21) du piston (20) est situé à l'extérieur de la face percée (23) du raccordement de travail (5).

6. Elément de retenue avec étranglement selon les revendications 1 et 5,
caractérisé en ce que les deux fentes (18,25) pratiquées sur les faces frontales (17,24) du piston (20) présentent des sections transversales identiques ou différentes.

7. Elément de retenue avec étranglement selon la revendication 5,
caractérisé en ce que, pour une circulation libre du raccordement de travail (6) à droite au raccordement de travail (5) à gauche, la fente traversante (25) présente une taille adaptée en section transversale.
